# EUROPÄISCHE PATENTSCHRIFT

(11) **EP 0 646 452 B1**
(45) Veröffentlichungstag und Bekanntmachung des Hinweises auf die Patenterteilung: **22.07.1998**
(21) Anmeldenummer: 94114852.0
(22) Anmeldetag: 21.09.1994
(51) Int. Cl.: B29C 67/20

(54) **Verfahren zur Herstellung von Schaumstoff-Formteilen**
Process for making foam plastic mouldings
Procédé pour la fabrication de pièces moulées en mousse de matière plastique

(30) Priorität: 30.09.1993 DE 4333330
(43) Veröffentlichungstag der Anmeldung: 05.04.1995
(73) Patentinhaber: BASF Aktiengesellschaft, 67063 Ludwigshafen (DE)
(72) Erfinder: Krükau, Fritz Ernst, D-67271 Battenberg (DE); Stöhr, Dieter, D-67269 Grünstadt (DE)

(56) Entgegenhaltungen:
- EP-A- 0 017 672
- EP-A- 0 486 105
- WO-A-88/01565
- BE-A- 447 668
- DE-A- 3 138 862
- DE-B- 1 266 484
- GB-A- 1 159 963
- US-A- 3 004 293
- US-A- 4 240 998
- US-A- 4 291 128
- DATABASE WPI Week 8030 Derwent Publications Ltd., London, GB; AN 80-52480c & JP-A-55 077 537 (WAKO CHEM KK) , 12.Juni 1980
- PATENT ABSTRACTS OF JAPAN vol. 8 no. 262 (M-341) [1699] ,30.November 1984 & JP-A-59 133022 (NIHON KEIKINZOKU K.K.) 31.Juli 1984,
- PATENT ABSTRACTS OF JAPAN vol. 6 no. 142 (M-146) ,31.Juli 1982 & JP-A-57 064525 (OKI TAKAYUKI) 19.April 1982,

## Beschreibung

Die Erfindung betrifft ein Verfahren zur Herstellung von Schaumstoff-Formteilen aus Abfallstücken.

Schaumstoff-Formteile aus offenzelligem Melaminharz-Schaumkunststoff finden in steigendem Maße Anwendung in der Schall- und Wärmedämmung von Gebäuden und im Automobilbau.

Sowohl bei der Herstellung als auch bei der Verarbeitung von derartigen Schaumstoffen entsteht zwangsläufig Abfallmaterial. Es stellte sich daher die Aufgabe, diesen Abfall sinnvoll zu verwerten.

Durch das erfindungsgemäße Verfahren wird diese Aufgabe elegant gelöst.

Die JP-A-57 064 525 beschreibt ein Verfahren zur Herstellung von Schaumstoff-Formteilen aus Schaumstoffabfallteilen, bei welchem
- die Abfallteile zu Flocken zerkleinert werden,
- eine rieselfähige Masse aus den Schaumstoff-Flocken und einem Bindemittel aus einem gesättigten Polyester und einem Isocyanat-Vernetzer zubereitet wird,
- die rieselfähige Masse in eine geschlossene Form mit einer beweglichen Wand und Einrichtungen zur Dampfzufuhr gegeben wird,
- die rieselfähige Masse in der Form komprimiert und mit Dampf beaufschlagt wird, wodurch die komprimierte Masse durch Härten des Bindemittels zu einem Formteil fixiert wird,
- und das Formteil aus der Form entnommen und getempert wird.

Bei der vorliegenden Erfindung werden als Ausgangsmaterialien elastische Schaumstoffe auf Basis von Melaminharzen, wie sie z. B. in EP-B 71 672 beschrieben sind, verwendet.

Die Abfallteile, von denen das erfindungsgemäße Verfahren ausgeht, haben im allgemeinen ein spezifisches Gewicht von 5 bis 100 g/l, insbesondere von 8 bis 20 g/l. Diese Abfallteile werden zunächst auf üblichen Mühlen, z. B. Schneidgranulatoren zu Flocken zerkleinert, deren Teilchengröße in weiten Grenzen zwischen etwa 0,1 mm und 50 mm schwanken kann.

Diese Flocken werden nun mit einer Lösung eines Bindemittels und eines Härters intensiv vermischt, so daß eine rieselfähige, krümelige Masse entsteht, welche auf
- 100: Gew.-Teile der Schaumstoff-Flocken
- 5 - 50: Gew.-Teile Bindemittel
- 0,1 - 5: Gew.-Teile Härter und
- 5 - 50: Gew.-Teile Wasser
enthält.

Als Bindemittel werden härtbare Melamin-, Harnstoff- oder Phenolharze verwendet, die vorzugsweise als etwa 50%ige wässrige Lösungen eingesetzt werden. Als Härter werden Verbindungen eingesetzt, die Protonen abspalten. In Frage kommen organische und anorganische Säuren, wie z. B. Ameisensäure, Sulfonsäuren, Phosphorsäure und Hydrogenphosphate.

Die rieselfähige Masse wird dann in eine geschlossene Form gegeben, die mindestens eine bewegliche Formwand hat und Einrichtungen zur Zufuhr von Dampf in das Innere der Form aufweist. Es kann sich dabei um eine einfache kubische oder quaderförmige Blockform handeln, oder um einen Formteilautomaten mit komplizierten, dem herzustellenden Formteil entsprechenden Abmessungen, wie sie bei der Herstellung von Formteilen aus EPS- oder EPP-Schaumpartikeln gebräuchlich sind.

Die rieselfähige Masse wird dann in der Form komprimiert, entweder rein mechanisch durch Druck auf die verschiebbaren Formwände oder durch pneumatische Druckfüllung und anschließendes Nachschieben der beweglichen Formwand. Beim Komprimieren wird nicht nur die Luft aus den Zwischenräumen zwischen den Flocken verdrängt, diese werden auch unter Dichteerhöhung zusammengepreßt, so daß die komprimierte Masse und folglich auch das daraus entstehende Formteil ein Raumgewicht von 15 bis 120, vorzugsweise von 20 bis 50 g/l aufweist.

Die verdichtete Füllung wird dann mit Dampf einer Temperatur oberhalb von 100 °C, vorzugsweise zwischen 104 und 158 °C, und einem Druck zwischen 0,1 und 5 bar durchströmt und anschließend gegebenenfalls noch autoklav bedampft. Die Bedampfungszeit liegt im allgemeinen zwischen 0,5 und 60 min. Diese Bedampfung bewirkt ein Anhärten des Bindemittels, wodurch das Formteil fixiert wird.

Das Formteil wird schließlich aus der Form entnommen und z. B. in einem Heißluftofen bei einer Temperatur oberhalb von 180 °C, vorzugsweise zwischen 180 und 250 für 0,15 bis 6 h getempert. Dabei härtet das Bindemittel aus, das anhaftende Wasser wird verdampft und Formaldehyd wird ausgetrieben.

Die erfindungsgemäß hergestellten Formteile können im Automobilbau, im Maschinenbau und im Bauwesen zur Wärmedämmung und Schalldämmung eingesetzt werden, z. B. als Schallabsorber, Maschinenkapselungen, Rohrisolierschalen sowie als Akustikplatten für Wand- und Deckenverkleidungen.

### Beispiel

100 Gew.teile eines Flockenmaterials einer mittleren Teilchengröße von 10 mm, hergestellt durch Zerkleinern von Abfallteilen aus einem offenzelligen Schaumstoff auf Basis eines Melaminharzes (BASOTECT der BASF) mit einem Raumgewicht von 8,5 bis 11,5 g/l werden mit 30 Gew.teilen einer 50%igen wässrigen Lösung eines Melaminharzes (KAURAMIN 650 der BASF) sowie 0,5 Gew.-teilen einer 50%igen Ameisensäure (Härter) besprüht und in einem Rührbehälter intensiv vermischt. Die rieselfähige Mischung wird mittels Füllinjektoren in einen EPS-Formteilautomaten mit den Abmessungen 300x200x45 mm injiziert. Über den Crackspalt wird die Füllung auf 40% ihres Einfüllvolumens verdichtet, dann mit Dampf (Druck 3,3 bar, Temperatur 146 °C) 60 sec. lang quer und 180 sec. lang autoklav durchströmt. Das Formteil wird aus der Form entnommen und 2 h bei 230 °C im Heißluftofen getempert. Sein Raumgewicht beträgt 55 g/l. Es weist eine glatte, ebene Oberfläche auf und besitzt eine hohe Druckfestigkeit.

## Patentansprüche

1. Verfahren zur Herstellung von Schaumstoff-Formteilen, das folgende Schritte aufweist:
a) Abfallteile aus offenzelligem Melaminharz-Schaumstoff mit einem Raumgewicht von 5 bis 100 g/l werden zu Flocken zerkleinert,
b) es wird eine rieselfähige Masse zubereitet aus
100 Gew.-Teilen der Schaumstoff-Flocken
5 - 50 Gew.-Teilen eines härtbaren Melamin-, Harnstoff- oder Phenolharzes als Bindemittel
0,1 - 5 Gew.-Teilen einer Säure als Härter für das Bindemittel
5 - 50 Gew.-Teilen Wasser,
c) die rieselfähige Masse wird in eine geschlossene Form gegeben, die mindestens eine bewegliche Formwand hat und Einrichtungen zur Dampfzufuhr in die Form aufweist,
d) die rieselfähige Masse wird in der Form auf ein Raumgewicht von 15 bis 120 g/l⁻¹ komprimiert,
e) in die Form wird Dampf mit einer Temperatur oberhalb von 100 °C geblasen, wodurch die komprimierte Masse durch Härten des Bindemittels zu einem Formteil fixiert wird,
f) das Formteil wird aus der Form entnommen und bei einer Temperatur oberhalb von 180 °C getempert.

2. Verfahren nach Anspruch 1, dadurch gekennzeichnet, daß der offenzellige Kunststoffschaum aus einem elastifizierten Melamin-Formaldehyd-Kondensationsprodukt besteht.

## Claims

1. A process for producing foam moldings which comprises the following steps:
a) pieces of open-cell melamine resin foam waste with a density of from 5 to 100 g/l are comminuted to give flakes,
b) a free-flowing material is prepared from 100 parts by weight of the foam flakes
from 5 to 50 parts by weight of a curable melamine resin, urea resin or phenolic resin as binder
from 0.1 to 5 parts by weight of an acid as curing agent for the binder and
from 5 to 50 parts by weight of water,
c) the free-flowing material is placed into a closed mold which has at least one moveable mold wall and equipment for introducing steam into the mold,
d) the free-flowing material is compressed in the mold to a density of from 15 to 120 g/l,
e) steam at above 100°C is blown into the mold, and as a result the compressed material becomes set as the binder cures, to give a molding,
f) the molding is removed from the mold and annealed at above 180°C.

2. A process as claimed in claim 1, wherein the open-cell plastic foam is composed of a melamine-formaldehyde condensation product which has been rendered resilient.

## Revendications

1. Procédé pour la fabrication de pièces moulées en mousse, qui présente les étapes suivantes :
a) on réduit des chutes de mousse de résine de mélamine à alvéoles ouvertes avec une densité de 5 à 100 g/l en flocons,
b) on prépare une masse fluide constituée de
100 parts en poids des flocons de mousse
5 à 50 parts en poids d'une résine durcissable de mélamine, d'urée ou de phénol à titre d'agent liant
0,1 à 5 parts en poids d'un acide à titre d'agent de durcissement pour l'agent liant
5 à 50 parts en poids d'eau,
c) la masse fluide est introduite dans un moule fermé qui possède au moins une paroi de moule mobile et des dispositifs pour l'introduction de vapeur dans le moule,
d) la masse fluide est comprimée dans le moule à une densité de 15 à 120 g/l,
e) on insuffle de la vapeur dans le moule à une température supérieure à 100 °C, processus par lequel la masse comprimée est fixée par le durcissement de l'agent liant en une pièce moulée,
f) la pièce moulée est prélevée du moule et recuite à une température supérieure à 180 °C.

2. Procédé selon la revendication 1, caractérisé en ce que la mousse de matière synthétique à alvéoles ouvertes est constituée d'un produit de condensation de mélamine-formaldéhyde élastifé.
